# FASCICULE DE BREVET EUROPEEN

(11) **EP 4 463 621 B1**
(45) Date de publication et mention de la délivrance du brevet: **24.12.2025**
(21) Numéro de dépôt: 23703257.8
(22) Date de dépôt: 02.01.2023
(51) Int. Cl.: F02C 3/107, F02C 7/08, F02C 7/32, F02C 7/36

(54) **TURBOMOTEUR A CYCLE RÉCUPÉRÉ**
TURBOMOTOR MIT REKUPERATIIERTEM ZYKLUS
RECUPERATED-CYCLE TURBOSHAFT ENGINE

(30) Priorité: 12.01.2022 FR 2200229
(43) Date de publication de la demande: 20.11.2024
(73) Titulaire: Safran Helicopter Engines, 64510 Bordes (FR)
(72) Inventeur: PONS, Bernard Claude, 77550 MOISSY-CRAMAYEL (FR)
(74) Mandataire: Gevers & Orès
(86) Numéro de dépôt international: PCT/FR2023/050001
(87) Numéro de publication internationale: WO 2023/135378

(56) Documents cités:
- RU-C1- 2 563 079
- US-A1- 2009 277 154

## Description

### Domaine technique de l'invention

La présente invention se rapporte à un turbomoteur à cycle récupéré pour un aéronef.

### Arrière-plan technique

La demande FR2962487A1 au nom de la demanderesse décrit une première architecture de turbomoteur à cycle récupéré.

Une telle architecture de turbomoteur comprend notamment d'avant en arrière une entrée d'air, un compresseur, une chambre de combustion, une turbine de détente (turbine liée ou turbine haute pression), une turbine de puissance (turbine libre ou turbine basse pression), et enfin une tuyère d'échappement.

Le compresseur, la chambre de combustion et la turbine de détente forment un générateur de gaz dans lequel le rotor du compresseur est entrainé mécaniquement par le rotor de la turbine de détente via un arbre de transmission.

La turbine de puissance est indépendante du générateur de gaz, et est destinée à entrainer une prise de mouvement (ou prise de force) du turbomoteur sur laquelle sont par exemple connectés le ou les propulseurs de l'aéronef.

L'air qui pénètre par l'entrée d'air est comprimé par le compresseur, puis injecté dans la chambre de combustion pour être mélangé avec du carburant. Le mélange air/carburant est brûlé et détendu dans la turbine de détente puis dans la turbine de puissance avant d'être évacué du turbomoteur par la tuyère d'échappement.

La turbomoteur est dit « à cycle récupéré » car l'énergie thermique résiduelle des gaz d'échappement est récupérée via des échangeurs chaleur placés dans la tuyère d'échappement, puis réinjectée dans le turbomoteur pour optimiser son rendement.

La demande US20090277154A1 décrit une seconde architecture de turbomoteur à cycle récupéré.

Cette seconde architecture présente la particularité d'avoir sa chambre de combustion à une extrémité arrière du turbomoteur, les turbines de détente et de puissance se trouvant axialement entre le compresseur et la chambre de combustion, les gaz d'échappement étant évacués du turbomoteur via deux tuyères en V disposées sensiblement au milieu du turbomoteur. Dans une telle architecture, l'air comprimé par le compresseur est acheminé vers l'arrière dans la chambre de combustion par des conduits d'alimentation disposés autour des turbines, l'air comprimé étant dévié avant son entrée dans la chambre de combustion.

L'énergie thermique récupérée par les échangeurs de chaleur est ici utilisée pour réchauffer l'air comprimé sortant du compresseur avant son entrée dans la chambre de combustion.

Une telle architecture permet d'améliorer les performances du turbomoteur puisque la quantité de carburant à injecter pour atteindre les températures de fonctionnement est inférieure à celle nécessaire dans le cas d'un turbomoteur à cycle classique (c'est-à-dire un turbomoteur dans lequel l'air comprimé sortant du compresseur alimente directement la chambre de combustion sans être réchauffé préalablement).

La prise de mouvement est entrainée par la turbine de puissance via un réducteur disposé axialement entre le compresseur et les turbines.

En comparaison à la première architecture décrite ci-dessus, cette seconde architecture décrite dans US20090277154A1 présente l'avantage de faire croiser le flux d'air sorti du compresseur, qui est amené vers la chambre de combustion par l'intermédiaire de deux conduits d'alimentation, avec le flux de gaz chauds sorti des deux tuyères d'échappement. Elle se prête donc particulièrement à l'intégration d'échangeurs de chaleur pour le cycle récupéré, tout en minimisant les longueurs de conduits nécessaires et donc la masse et l'encombrement du système à cycle récupéré.

Toutefois, la seconde architecture présente des inconvénients.

En effet, premièrement, le réducteur précité est généralement associé à une boite d'accessoires qui est destinée à transmettre une puissance mécanique prélevée sur les turbines à divers accessoires du turbomoteur tels qu'une pompe, un alterno-démarreur, un séparateur air/huile, etc.

Le réducteur et la boite d'accessoires sont volumineux, ce que limite significativement l'espace disponible autour du compresseur et des turbines, et donc les possibilités pour implanter le ou les échangeurs de chaleur destinés à la récupération de l'énergie thermique résiduelle des gaz d'échappement.

Deuxièmement, l'agencement du réducteur sensiblement au milieu du turbomoteur oblige un déport conséquent de la prise de mouvement pour contourner notamment le compresseur et les conduits d'alimentation, au détriment de la masse et de l'équilibre (ou répartition des masses) du turbomoteur.

L'objectif de la présente invention est donc d'apporter une solution simple, efficace et économique permettant de répondre aux inconvénients précités. L'art antérieur comprend également le document RU2563079C1.

### Résumé de l'invention

L'invention propose ainsi un turbomoteur pour un aéronef, le turbomoteur comprenant :
- un générateur de gaz comprenant un compresseur, une chambre de combustion et une turbine de détente, le compresseur et la turbine de détente s'étendant selon un même axe longitudinal X et étant reliés mécaniquement l'un à l'autre, la chambre de combustion étant disposée axialement à une extrémité arrière du turbomoteur ;
- une turbine de puissance disposée axialement entre le compresseur et la turbine de détente, la turbine de puissance entrainant en rotation une prise de mouvement via un réducteur ;

- un échangeur de chaleur comportant :
- un premier circuit comportant une entrée reliée à une sortie du compresseur, et une sortie reliée à une entrée de la chambre de combustion, et
- un second circuit comportant une entrée reliée à une sortie de la turbine de puissance,
caractérisé en ce que le compresseur comprend un premier arbre entrainé en rotation par un second arbre de la turbine de détente via un mécanisme de transmission, ledit mécanisme de transmission et ledit réducteur faisant partie d'un boitier de transmission qui est disposé axialement à une extrémité avant du turbomoteur, de sorte que le compresseur soit axialement disposé entre le boitier de transmission et la turbine de puissance.

Un tel mécanisme de transmission permet de transmettre le mouvement de rotation initié par la turbine de détente jusqu'au compresseur tout en ayant la possibilité de modifier sa vitesse, de manière à faire fonctionner le compresseur dans la plage de fonctionnement souhaitée. Il est par exemple possible d'accroitre la vitesse du premier arbre du compresseur, de sorte à minimiser le nombre d'étages de compression nécessaire, au bénéfice notamment de l'encombrement axial du turbomoteur.

Un tel agencement du boitier de transmission (réducteur et mécanisme de transmission) permet notamment de libérer de l'espace autour du compresseur et des turbines pour implanter l'échangeur de chaleur. Il est désormais possible d'envisager l'implantation d'un échangeur de chaleur annulaire autour de l'axe X.

Un tel agencement du boitier de transmission permet également de simplifier l'accès et l'entrainement de la prise de mouvement.

Une telle architecture de turbomoteur est dit à « cycle récupéré » car l'énergie thermique résiduelle des gaz d'échappement est récupérée via l'échangeur de chaleur pour réchauffer l'air comprimé sortant du compresseur avant son entrée dans la chambre de combustion. Une telle architecture à cycle récupéré permet d'améliorer les performances du turbomoteur puisque la quantité de carburant à injecter pour atteindre les températures de fonctionnement est inférieure à celle nécessaire dans le cas d'un turbomoteur à cycle classique.

Le turbomoteur selon l'invention peut comprendre une ou plusieurs des caractéristiques, prises isolément les unes des autres ou en combinaison les unes avec les autres :
- la turbine de puissance comprend un troisième arbre, les premier, second et troisième arbres étant coaxiaux avec ledit axe longitudinal X ;
- le troisième arbre de la turbine de puissance est disposé radialement entre les premier et second arbres ;
- ledit mécanisme de transmission présente un rapport de transmission supérieur à 1, de sorte que la vitesse du premier arbre du compresseur soit supérieure à la vitesse du second arbre de la turbine de détente ;
- ledit mécanisme de transmission est un mécanisme à engrenages ;
- ledit mécanisme de transmission comprend une première roue dentée solidaire du premier arbre du compresseur et une seconde roue dentée solidaire du second arbre de la turbine de détente, ledit réducteur comprenant une troisième roue dentée solidaire d'un troisième arbre de la turbine de puissance, la troisième roue dentée du réducteur étant disposée axialement entre lesdites première et seconde roues dentées du mécanisme de transmission ;
- le boitier de transmission présente, d'avant en arrière, la seconde roue dentée, la troisième roue dentée et la première roue dentée ;
- ladite prise de mouvement est coaxiale ou verticalement alignée avec ledit axe longitudinal X ;
- le premier arbre du compresseur est guidé en rotation via un premier palier et un second palier disposés dans le boitier de transmission ;
- ledit second arbre de la turbine de détente est guidé en rotation via un troisième palier disposé dans le boitier de transmission, et un quatrième palier disposé soit entre les turbines de détente et de puissance soit à une extrémité arrière dudit second arbre se trouvant du côté opposé à la turbine de puissance ;
- ledit troisième arbre de la turbine de puissance est guidé en rotation via un cinquième palier disposé dans le boitier de transmission, et un sixième palier disposé axialement entre le compresseur et la turbine de puissance ;
- l'échangeur de chaleur est annulaire autour dudit axe longitudinal X ;
- l'échangeur de chaleur est disposé au moins en partie autour de la turbine de puissance ;
- l'échangeur de chaleur est sectorisé et comprend au moins deux secteurs mis circonférentiellement bout à bout ou distants circonférentiellement l'un de l'autre, chaque secteur de l'échangeur de chaleur comprenant une sous-entrée du premier circuit reliée à la sortie du compresseur ;
- l'échangeur de chaleur est monobloc ;
- le turbomoteur comprend au moins un premier conduit de dérivation comportant une entrée reliée à la sortie du compresseur et une sortie reliée à l'entrée de la chambre de combustion, de sorte que le premier conduit de dérivation alimente la chambre de combustion en air comprimé sortant du compresseur sans passer par l'échangeur de chaleur ;
- le turbomoteur comprend au moins un second conduit de dérivation comportant une entrée reliée à la sortie de la turbine de puissance et une sortie reliée à la tuyère, de sorte que le second conduit de dérivation alimente la tuyère en gaz d'échappement sortant de la turbine de puissance sans passer par l'échangeur de chaleur ;
- le réducteur fait partie d'un boitier de transmission, le boitier de transmission comprenant une boite d'accessoires destinée à transmettre une puissance mécanique prélevée sur le compresseur et/ou la turbine de détente et/ou la turbine de puissance à divers accessoires du turbomoteur ;
- l'échangeur comprend un blindage de rétention de pales mobiles de la turbine de puissance configuré pour contenir lesdites pales mobiles en cas de survitesse de la turbine de puissance ;
- l'échangeur de chaleur comprend une couche d'atténuation acoustique. La présente invention concerne encore un aéronef , de préférence un hélicoptère monomoteur, comprenant un turbomoteur tel que décrit précédemment.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue schématique d'un turbomoteur selon l'invention ;
[Fig.2] la figure 2 est une vue de détail d'une première variante de réalisation ;
[Fig.3] la figure 3 est une vue de détail d'une seconde variante de réalisation ;
[Fig.4] la figure 4 est une vue de détail d'une troisième variante de réalisation ;
[Fig.5] la figure 5 est une vue de détail d'une quatrième variante de réalisation.

### Description détaillée de l'invention

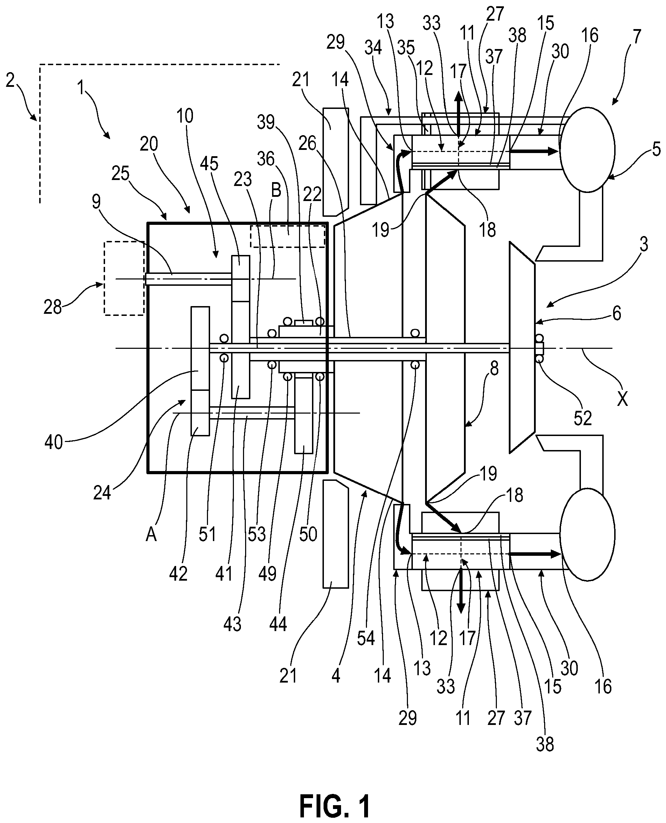

Sur la figure 1 est représenté schématiquement un turbomoteur 1 pour un aéronef 2. L'aéronef 2 est de préférence un hélicoptère monomoteur, et notamment un hélicoptère monomoteur léger dont la masse maximale au décollage (connue sous l'acronyme anglais MTOW pour « Maximum Take-Off Weight ») ne dépasse pas 3175 kg (ou 7000 lbs).

Le turbomoteur 1 comprend :
- un générateur de gaz 3 comprenant un compresseur 4, une chambre de combustion 5 et une turbine de détente 6, le compresseur 4 et la turbine de détente 6 étant reliés mécaniquement l'un à l'autre, la chambre de combustion 5 étant disposée axialement à une extrémité arrière 7 du turbomoteur 1 ;
- une turbine de puissance 8 disposée axialement entre le compresseur 4 et la turbine de détente 6, la turbine de puissance 8 entrainant en rotation une prise de mouvement 9 via un réducteur 10 ;
- un échangeur de chaleur 11 comportant :
- un premier circuit 12 comportant une entrée 13 reliée à une sortie 14 du compresseur 4, et une sortie 15 reliée à une entrée 16 de la chambre de combustion 5, et
- un second circuit 17 comportant une entrée 18 reliée à une sortie 19 de la turbine de puissance 8.

Selon l'invention, le compresseur 4 comprend un premier arbre 22 entrainé en rotation par un second arbre 23 de la turbine de détente 6 via un mécanisme de transmission 24, ledit mécanisme de transmission 24 et ledit réducteur 10 faisant partie d'un boitier de transmission 25 qui est disposé axialement à une extrémité avant 20 du turbomoteur 1, de sorte que le compresseur 4 soit axialement disposé entre le boitier de transmission 25 et la turbine de puissance 8.

Un tel mécanisme de transmission 24 permet de transmettre le mouvement de rotation initié par la turbine de détente 6 jusqu'au compresseur 4 tout en ayant la possibilité de modifier sa vitesse, de manière à faire fonctionner le compresseur 4 dans la plage de fonctionnement souhaitée.

Un tel agencement du boitier de transmission 25 permet notamment de libérer de l'espace autour du compresseur 4 et des turbines 6, 8 pour implanter l'échangeur de chaleur 11, mais également de simplifier l'accès et l'entrainement de la prise de mouvement 9.

Une telle architecture de turbomoteur 1 est dit à « cycle récupéré » car l'énergie thermique résiduelle des gaz d'échappement est récupérée via l'échangeur de chaleur 11 pour réchauffer l'air comprimé sortant du compresseur 4 avant son entrée dans la chambre de combustion 5. Une telle architecture à cycle récupéré permet d'améliorer les performances du turbomoteur 1 puisque la quantité de carburant à injecter pour atteindre les températures de fonctionnement est inférieure à celle nécessaire dans le cas d'un turbomoteur à cycle classique.

Le turbomoteur 1 est défini suivant un axe longitudinal X qui correspond à l'axe de rotation des arbres 22, 23, 26 respectivement du compresseur 4 et des turbines 6, 8 du turbomoteur 1.

Par convention, dans la présente demande, les termes « avant » et « arrière » définissent les positions axiales des éléments du turbomoteur 1 les uns par rapport aux autres, tout en sachant que le boitier de transmission 25 est disposé axialement à une extrémité avant 20 du turbomoteur 1, et la chambre de combustion 5 est disposée axialement à une extrémité arrière 7 du turbomoteur 1.

On entend par « axial » ou « axialement » toute direction parallèle à l'axe X du turbomoteur 1, et par « radial » ou « radialement » toute direction perpendiculaire à l'axe X du turbomoteur 1.

De même, par convention dans la présente demande, les termes « interne » et « externe » associés au turbomoteur 1 sont définis radialement par rapport à l'axe X du turbomoteur 1.

Tel qu'illustré sur la figure 1, le compresseur 4 est alimenté en air via une entrée d'air 21 et comprend un premier arbre 22 mobile autour de l'axe X. Le compresseur 4 peut comprendre un ou plusieurs étages de compression, chaque étage pouvant être axial ou centrifuge. Les rotors de chaque étage (roue ou rouet) sont solidaires en rotation du premier arbre 22.

Avantageusement, le denier étage du compresseur 4 est un étage centrifuge.

La chambre de combustion 5 est disposée axialement à une extrémité arrière 7 du turbomoteur 1. La chambre 5 est alimentée en air comprimé et réchauffé (via l'échangeur de chaleur 11), et en carburant via un ou plusieurs injecteurs selon la technologie de chambre de combustion retenue. Le mélange air/carburant est brûlé sous l'action d'un ou plusieurs dispositifs d'allumage. La chambre de combustion 5 peut être à pots séparés ou à flux direct ou à flux inversé.

Une chambre de combustion à pots séparés présente l'avantage d'avoir un faible coût de production dans la limite où le nombre d'injecteurs est réduit (il peut être limité à un seul injecteur) et d'être compacte, ce qui permet par exemple d'intégrer des dispositifs visant à minimiser les émissions polluantes à l'extrémité arrière de la chambre. Une telle chambre de combustion présente également une enveloppe aux dimensions réduites, ce qui permet de minimiser l'air de refroidissement nécessaire et de simplifier la mise en place de la technologie « Pauvre, Pré-mélangé et Prévaporisé » connue sous l'acronyme anglais LPP pour « Lean Premix Prevaporised ».

Une chambre de combustion à flux direct présente également l'avantage d'être compacte, ce qui permet de minimiser l'air de refroidissement nécessaire. La quantité d'air de refroidissement nécessaire pour une chambre de combustion à flux direct est inférieure à celle nécessaire pour une chambre de combustion à flux inversé.

Une chambre de combustion à flux inversé (ou chambre de combustion à retour) présente l'avantage de minimiser l'encombrement axial du turbomoteur et de libérer un espace central dans lequel il est possible d'intégrer un ou plusieurs éléments tels qu'un palier de guidage de l'arbre 23 de la turbine de détente 6.

La turbine de détente 6 (également appelée turbine haute pression) comprend un second arbre 23 mobile autour de l'axe X. La turbine de détente 6 peut comprendre un ou plusieurs étages de détente, chaque étage pouvant être axial ou centripète. Les rotors de chaque étage (roue ou rouet) sont solidaires en rotation du second arbre 23. Les gaz d'échappement provenant de la chambre de combustion 5 sont détendus dans la turbine de détente 6 puis dans la turbine de puissance 8.

La turbine de puissance 8 (également appelée turbine libre ou turbine basse pression) est indépendante du générateur de gaz 3 et comprend un troisième arbre 26 mobile autour de l'axe X. La turbine de puissance 8 peut comprendre un ou plusieurs étages de détente, chaque étage pouvant être axial ou centripète. Les rotors de chaque étage (roue ou rouet) sont solidaires en rotation du troisième arbre 26. Les gaz d'échappement sortant de la turbine de puissance 8 traversent préalablement l'échangeur de chaleur 11 (et plus précisément le second circuit) avant d'être évacués dans l'environnement extérieur via une tuyère d'échappement 27.

La prise de mouvement 9 (également appelée prise de force) se trouve en sortie du réducteur 10 et entraine en rotation par exemple un ou plusieurs propulseurs de l'aéronef 2, ou encore un alterno-générateur pour de la génération électrique. Lorsque l'aéronef 2 est un hélicoptère, la prise de mouvement 9 peut entrainer un rotor principal via une boite de transmission principale 28 (connue sous l'acronyme BTP) et un rotor arrière de queue (connu également sous l'acronyme RAC pour rotor anticouple) via une boite de transmission arrière (connue sous l'acronyme BTA) (non représentée).

Tel qu'illustré sur la figure 1, le turbomoteur 1 comprend, d'avant en arrière, le boitier de transmission 25 (réducteur 10 et mécanisme de transmission 24), le compresseur 4, la turbine de puissance 8, la turbine de détente 6 et la chambre de combustion 5.

Le générateur de gaz 3 forme le corps haute pression du turbomoteur 1, et la turbine de puissance 8 et le réducteur 10 forment le corps basse pression du turbomoteur 1.

Tel qu'indiqué ci-dessus, l'échangeur de chaleur 11 permet de récupérer l'énergie thermique résiduelle des gaz d'échappement pour réchauffer l'air comprimé sortant du compresseur 4 avant son entrée dans la chambre de combustion 5.

L'échangeur de chaleur 11 peut être par exemple un échangeur à tubes ou un échangeur à plaques ou un échangeur à ailettes. L'échangeur de chaleur 11 pourra notamment être réalisé en fabrication additive.

L'entrée 13 du premier circuit 12 de l'échangeur de chaleur 11 est reliée à une sortie 14 du compresseur 4 via une alimentation avant 29 comprenant un ou plusieurs conduits. L'alimentation avant 29 peut comprendre un diffuseur radial et un diffuseur axial (également appelé redresseur), la sortie 14 du compresseur 4 étant reliée à une entrée du diffuseur radial et l'entrée 13 du premier circuit 12 étant reliée à une sortie du diffuseur axial.

La sortie 15 du premier circuit 12 de l'échangeur de chaleur 11 est reliée à une entrée 16 de la chambre de combustion 5 via une alimentation arrière 30 comprenant un ou plusieurs conduits. Cette alimentation arrière 30, peut comporter des grilles de diffusion de manière à contrôler le Mach et la giration de l'écoulement alimentant la chambre de combustion 5 via son entrée 16.

L'entrée 18 du second circuit 17 de l'échangeur de chaleur 11 est reliée à la sortie 19 de la turbine de puissance 8 via un ou plusieurs conduits internes de la tuyère d'échappement 27.

La sortie 33 du second circuit 17 de l'échangeur de chaleur 11 est reliée à l'environnement extérieur via un ou plusieurs conduits externes de la tuyère d'échappement 27.

Avantageusement, tel qu'illustré sur la figure 1, l'échangeur de chaleur 11 est annulaire autour de l'axe X. Une telle configuration est possible du fait du positionnement du boitier de transmission 25 à l'extrémité avant 20 du turbomoteur 1.

Avantageusement, l'échangeur de chaleur 11 est axisymétrique par rapport à l'axe X, de manière à obtenir un turbomoteur équilibré.

Avantageusement, l'échangeur de chaleur 11 est disposé au moins en partie autour du compresseur 4 et/ou de la turbine de puissance 8 et/ou de la turbine de détente 6, et de préférence au moins en partie autour de la turbine de puissance 8.

Selon le mode de réalisation illustré sur la figure 1, l'échangeur de chaleur 11 est annulaire et s'étend de manière continue autour de l'axe X. Dans une telle configuration, l'échangeur de chaleur 11 peut être monobloc (ou d'un seul tenant), et de préférence réalisé en fabrication additive (par exemple fabrication additive par fusion sélective sur lit de poudre). La fabrication additive présente l'avantage de pouvoir obtenir des formes complexes.

L'échangeur de chaleur 11 peut être sectorisé et comprendre au moins deux secteurs 31 mis circonférentiellement bout à bout ou distants circonférentiellement l'un de l'autre, chaque secteur 31 de l'échangeur de chaleur 11 comprenant une sous-entrée 32 du premier circuit 12 reliée à la sortie 14 du compresseur 4. Le premier circuit 12 peut être subdivisé en une pluralité de sous-premiers circuits, chaque secteur 31 pouvant comprendre un sous-premier circuit. Lorsque l'alimentation avant 29 comprend un diffuseur radial et d'un diffuseur axial, chaque sous-entrée 32 du premier circuit 12 peut être reliée à une sous-sortie du diffuseur axial. Un diffuseur axial multi-sorties (également appelé en anglais « pipe diffuser ») peut être utilisé dans ce cas de figure. Chaque secteur 31 peut être monobloc (ou d'un seul tenant), et de préférence réalisé en fabrication additive (par exemple fabrication additive par fusion sélective sur lit de poudre). L'avantage d'avoir un échangeur de chaleur 11 sectorisé est de simplifier la maintenance et de permettre le remplacement d'un secteur 31 défectueux indépendamment des autres.

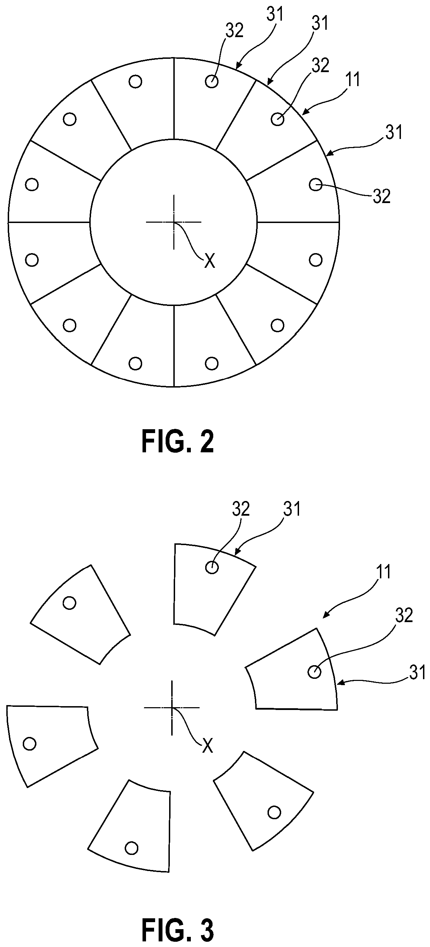

Selon la première variante de réalisation illustrée sur la figure 2, l'échangeur de chaleur 11 est sectorisé et comprend une rangée annulaire de douze secteurs 31 mis circonférentiellement bout à bout, chaque secteur 31 de l'échangeur de chaleur 11 comprenant une sous-entrée 32 du premier circuit 12 reliée à la sortie 14 du compresseur 4.

Selon la seconde variante de réalisation illustrée sur la figure 3, l'échangeur de chaleur 11 est sectorisé et comprend six secteurs 31 répartis de manière régulière autour de l'axe X, deux secteurs 31 successifs étant distants circonférentiellement l'un de l'autre, chaque secteur 31 de l'échangeur de chaleur 11 comprenant une sous-entrée 32 du premier circuit 12 reliée à la sortie 14 du compresseur 4.

Avantageusement, le turbomoteur 1 comprend au moins un premier conduit de dérivation 34 comportant une entrée reliée à la sortie 14 du compresseur 4 et une sortie reliée à l'entrée 16 de la chambre de combustion 5, de sorte que le premier conduit de dérivation 34 alimente directement la chambre de combustion 5 en air comprimé sortant du compresseur 4 sans passer par l'échangeur de chaleur 11 (ou en bypassant l'échangeur).

Le turbomoteur 1 peut bien évidemment comprendre plusieurs premiers conduits 34 répartis ou non de manière régulière autour de l'axe X, les premiers conduits 34 pouvant présenter des caractéristiques dimensionnelles et géométriques identiques ou distinctes.

Le ou les premiers conduits 34 sont notamment utilisés pour alimenter la chambre de combustion 5 lors des phases de décélération, pour lesquelles il y a besoin d'envoyer de l'air le plus froid possible vers la turbine haute pression et donc de ne pas être pénalisé par la chaleur emmagasinée dans l'échangeur de chaleur. Le besoin de décélération est important sur le ou les turbomoteurs d'un hélicoptère pour sa pilotabilité, sinon il y a un risque d'amener un sur-régime du rotor principal. Le ou les premiers conduits 34 peuvent être associés à des vannes pour permettre de contrôler le passage ou non de l'air ainsi que le débit d'alimentation.

Selon le mode de réalisation illustré sur la figure 1, le turbomoteur 1 comprend un unique premier conduit de dérivation 34 qui est disposé autour de l'échangeur de chaleur 11. Lorsque l'échangeur de chaleur 11 est sectorisé, un ou plusieurs premiers conduits 34 peuvent traverser l'échangeur 11 via l'espace circonférentiel défini entre deux secteurs 31 successifs.

Avantageusement, le turbomoteur 1 comprend au moins un second conduit de dérivation 35 comportant une entrée reliée à la sortie 19 de la turbine de puissance 8 et une sortie reliée à la tuyère 27, de sorte que le second conduit de dérivation 35 alimente directement la tuyère 27 en gaz d'échappement sortant de la turbine de puissance 8 sans passer par l'échangeur de chaleur 11 (ou en bypassant l'échangeur).

Le turbomoteur 1 peut bien évidemment comprendre plusieurs seconds conduits 35 répartis ou non de manière régulière autour de l'axe X, les seconds conduits 35 pouvant présenter des caractéristiques dimensionnelles et géométriques identiques ou distinctes.

Le ou les seconds conduits 35 sont notamment utilisés pour évacuer plus rapidement les gaz d'échappement en minimisant les pertes de charge, de manière à accroitre la puissance du turbomoteur. Ce surplus de puissance est notamment utile lorsque le turbomoteur se trouve dans un régime de forte accélération, par exemple le régime de décollage où le turbomoteur doit atteindre rapidement la Puissance Maximale de Décollage connue sous l'acronyme PMD. Le ou les seconds conduits 35 peuvent être associés à des vannes pour permettre de contrôler le passage ou non des gaz d'échappement ainsi que le débit d'échappement.

Selon le mode de réalisation illustré sur la figure 1, le turbomoteur 1 comprend un unique second conduit de dérivation 35 qui s'étend radialement vers l'extérieur depuis la sortie 19 de la turbine de puissance 8. Lorsque l'échangeur de chaleur 11 est sectorisé, un ou plusieurs seconds conduits 35 peuvent traverser l'échangeur 11 via l'espace circonférentiel défini entre deux secteurs 31 successifs.

Avantageusement, le boitier de transmission 25 comprend une boite d'accessoires 36 destinée à transmettre une puissance mécanique prélevée sur le compresseur 4 et/ou la turbine de détente 6 et/ou la turbine de puissance 8 à divers accessoires du turbomoteur 1. Les accessoires sont par exemple une pompe, un alterno-démarreur, un séparateur air/huile, etc. Le fait d'avoir la boite d'accessoires 36 à une extrémité avant 20 du turbomoteur 1 permet d'optimiser l'agencement des accessoires les uns par rapport aux autres et de maximiser leur nombre.

Avantageusement, l'échangeur de chaleur 11 comprend un blindage de rétention 37 de pales mobiles de la turbine de puissance 8 configuré pour contenir les pales mobiles en cas de survitesse de la turbine de puissance 8. Les pales de la turbine de puissance 8 comprennent chacune une section frangible qui est configurée pour se rompre lorsque la turbine de puissance 8 se trouve en survitesse, ces sections frangibles forment un dispositif de protection (dénommé en anglais « blade shedding ») permettant de stopper le rotor de la turbine de puissance 8 en cas de survitesse.

Le blindage de rétention 37 pourrait être configuré pour contenir également les pales mobiles de la turbine de détente 6 en cas de survitesse de la turbine de détente 6.

La présence de l'échangeur de chaleur 11 forme un obstacle au bruit produit par le turbomoteur, l'échangeur 11 jouant ainsi le rôle d'un atténuateur acoustique.

Avantageusement, tel qu'illustré sur la figure 1, l'échangeur de chaleur 11 peut comprendre en outre une couche d'atténuation acoustique 38. Cette couche d'atténuation acoustique 38 peut par exemple comprendre une structure alvéolaire (par exemple une structure en nid d'abeille). Avantageusement, tel qu'illustré sur la figure 1, les premier, second et troisième arbres 22, 23, 26 sont coaxiaux avec l'axe X.

Tel qu'illustré sur la figure 1, le troisième arbre 26 de la turbine de puissance 8 est disposé radialement entre les premier et second arbres 22, 23.

Tel qu'indiqué ci-dessus, selon l'invention, le premier arbre 22 du compresseur 4 est entrainé en rotation par le second arbre 23 de la turbine de détente 6 via un mécanisme de transmission 24.

Le mécanisme de transmission 24 peut présenter un rapport de transmission fixe ou variable, ce rapport de transmission pouvant être différent de 1, à savoir soit inférieur à 1 ou soit supérieur à 1.

Lorsque le rapport de transmission est inférieur à 1, le mécanisme de transmission 24 est un réducteur (ou démultiplicateur), de sorte que la vitesse du premier arbre 22 du compresseur 4 soit inférieure à celle du second arbre 23 de la turbine de détente 6.

Lorsque le rapport de transmission est supérieur à 1, le mécanisme de transmission 24 est un multiplicateur, de sorte que la vitesse du premier arbre 22 du compresseur 4 soit supérieure à celle du second arbre 23 de la turbine de détente 6.

Avantageusement, tel qu'illustré sur la figure 1, le mécanisme de transmission 24 présente un rapport de transmission fixe qui est supérieur à 1, de sorte que la vitesse du premier arbre 22 du compresseur 4 soit supérieure à la vitesse du second arbre 23 de la turbine de détente 6.

Une telle configuration permet de trouver le meilleur compromis de vitesse pour la vitesse du compresseur 4 et la vitesse de la turbine de détente 6, de telle sorte de maximiser les rendements de ces deux composants. Avantageusement, tel qu'illustré sur la figure 1, le mécanisme de transmission 24 est un mécanisme à engrenages (ou un train d'engrenages). Tel qu'indiqué ci-dessus, ce mécanisme à engrenages 24 présente un rapport de transmission fixe qui est supérieur à 1, de sorte que la vitesse du premier arbre 22 du compresseur 4 soit supérieure à la vitesse du second arbre 23 de la turbine de détente 6.

Le mécanisme à engrenages 24 peut comprendre un ou plusieurs étages de réduction. Le mécanisme à engrenages 24 peut également comprendre un ou plusieurs trains épicycloïdaux. Les trains épicycloïdaux ont l'avantage de pouvoir présenter des rapports de réduction ou de multiplication élevés tout en étant compacts.

Plus précisément, tel qu'illustré sur la figure 1, le mécanisme à engrenages 24 comprend une première roue dentée 39 solidaire du premier arbre 22 du compresseur 4 et une seconde roue dentée 40 solidaire du seconde arbre 23 de la turbine de détente 6. Le réducteur 10 comprend une troisième roue dentée 41 solidaire du troisième arbre 26 de la turbine de puissance 8. La troisième roue dentée 41 du réducteur 10 est disposée axialement entre les première et seconde roues dentées 39, 40 du mécanisme de transmission 24.

Tel qu'illustré sur la figure 1, le boitier de transmission 25 présente, d'avant en arrière, la seconde roue dentée 40, la troisième roue dentée 41 et la première roue dentée 39.

Plus précisément, selon le mode de réalisation illustré sur la figure 1, la seconde roue dentée 40 est centrée sur l'axe X et motrice (ou menante). La seconde roue dentée 40 est liée en rotation à une extrémité avant du second arbre 23. La seconde roue dentée 40 est engrenée avec une première roue dentée intermédiaire 42. La première roue dentée intermédiaire 42 est réceptrice (ou menée) et solidaire d'un arbre intermédiaire 43 mobile autour d'un axe A qui est décalé radialement par rapport à l'axe X et parallèle à l'axe X. Le mécanisme de transmission 24 comprend en outre une seconde roue dentée intermédiaire 44 qui est engrenée avec la première roue dentée 39. La seconde roue dentée intermédiaire 44 est motrice et solidaire de l'arbre intermédiaire 43. La première roue dentée 39 est centrée sur l'axe X et réceptrice. Les engrenages du mécanisme de transmission 24 sont à contact extérieur. La première roue dentée 39 comprend moins de dents que la seconde roue dentée intermédiaire 44. La seconde roue dentée 40 comprend davantage de dents que la première roue dentée intermédiaire 42. Les première et seconde roues dentées 39, 40 tournent dans le même sens de rotation, l'arbre intermédiaire 43 tourne dans un sens de rotation opposé. Les différentes roues dentées 39, 40, 42, 44 du mécanisme à engrenages 24 permettent d'obtenir le rapport de transmission souhaité. La première roue dentée 39 peut être soit venue de matière avec le premier arbre 22, ou soit rapportée sur le premier arbre 22 et liée en rotation avec le premier arbre 22 via des moyens d'accouplement tels que des cannelures ou par frettage. Selon le mode de réalisation illustré sur la figure 1, la troisième roue dentée 41 est centrée sur l'axe X et motrice (ou menante). La troisième roue dentée 41 est liée en rotation à une extrémité avant du troisième arbre 26.

La troisième roue dentée 41 est engrenée avec une troisième roue dentée intermédiaire 45. La troisième roue dentée intermédiaire 45 est réceptrice (ou menée) et solidaire de la prise de mouvement 9 mobile autour d'un axe B qui est décalé radialement par rapport à l'axe X et parallèle à l'axe X.

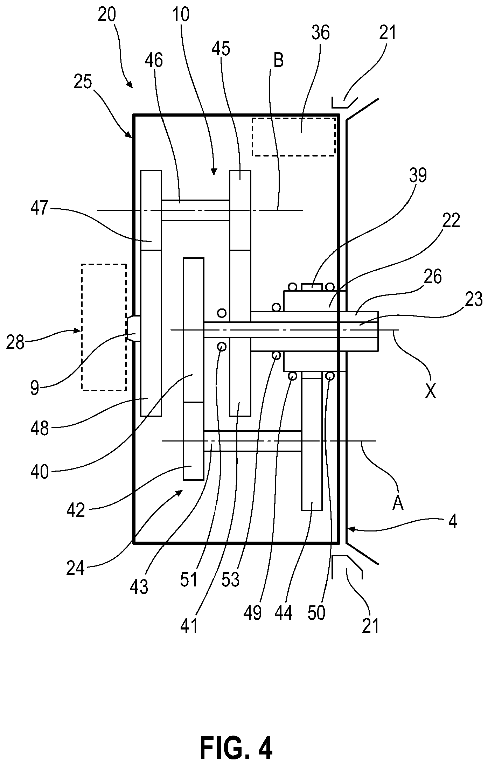

Selon la troisième variante de réalisation illustrée sur la figure 4, la troisième roue dentée intermédiaire 45 est solidaire d'un second arbre intermédiaire 46 mobile autour de l'axe B qui est décalé radialement par rapport à l'axe X et parallèle à l'axe X. Le réducteur 10 comprend en outre une quatrième roue dentée intermédiaire 47 qui est engrenée avec une roue dentée de sortie 48. La quatrième roue dentée intermédiaire 47 est motrice et solidaire du second arbre intermédiaire 46. La roue dentée de sortie 48 est réceptrice et solidaire de la prise de mouvement 9. La prise de mouvement 9 est coaxiale ou verticalement alignée avec l'axe X.

Selon le mode de réalisation illustré sur la figure 1, le premier arbre 22 du compresseur 4 est guidé en rotation via un premier palier 49 et un second palier 50 disposés dans le boitier de transmission 25.

Selon le mode de réalisation illustré sur la figure 1, le second arbre 23 de la turbine de détente 6 est guidé en rotation via un troisième palier 51 disposé dans le boitier de transmission 25, et un quatrième palier 52 disposé à une extrémité arrière du second arbre 23 se trouvant du côté opposé à la turbine de puissance 8. Un tel agencement est notamment utilisé lorsque la chambre de combustion 5 est à flux inversé, ce qui permet d'éviter l'implantation de servitudes entre les turbines 6, 8, au bénéfice de l'encombrement axial du turbomoteur.

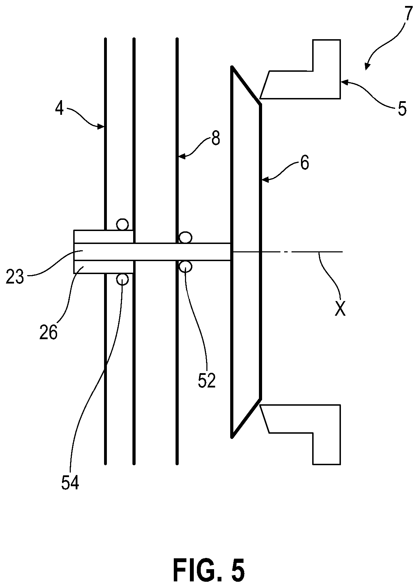

Selon une quatrième variante de réalisation illustrée sur la figure 5, le quatrième palier 52 de guidage du second arbre 23 est disposé entre les turbines de détente et de puissance 6, 8. Un tel agencement du quatrième palier 52 est notamment utilisé lorsque la chambre de combustion 5 ne dispose pas d'un espace central libre pour l'installation d'un palier.

Selon le mode de réalisation illustré sur la figure 1, le troisième arbre 26 de la turbine de puissance 8 est guidé en rotation via un cinquième palier 53 disposé dans le boitier de transmission 25, et un sixième palier 54 disposé axialement entre le compresseur 4 et la turbine de puissance 8.

Avantageusement, les paliers sont des paliers à roulement. Les roues dentées et les paliers sont lubrifiés à l'aide d'un lubrifiant liquide tel que de l'huile. D'une manière générale, chaque roue dentée 39-48 peut être soit venue de matière avec l'arbre correspondant, ou soit rapportée sur l'arbre correspondant et liée en rotation avec l'arbre correspondant via des moyens d'accouplement tels que des cannelures ou par frettage. L'avantage d'utiliser des moyens d'accouplement est de pouvoir remplacer aisément les roues dentées seules, lorsque celles-ci sont usées et doivent être remplacées.

## Revendications

1. Turbomoteur (1) pour aéronef (2), le turbomoteur (1) comprenant :
- un générateur de gaz (3) comprenant un compresseur (4), une chambre de combustion (5) et une turbine de détente (6), le compresseur (4) et la turbine de détente (6) s'étendant selon un même axe longitudinal (X) et étant reliés mécaniquement l'un à l'autre, la chambre de combustion (5) étant disposée axialement à une extrémité arrière (7) du turbomoteur (1) ;
- une turbine de puissance (8) disposée axialement entre le compresseur (4) et la turbine de détente (6), la turbine de puissance (8) entrainant en rotation une prise de mouvement (9) via un réducteur (10) ;
- un échangeur de chaleur (11) comportant :
- un premier circuit (12) comportant une entrée (13) reliée à une sortie (14) du compresseur (4), et une sortie (15) reliée à une entrée (16) de la chambre de combustion (5), et
- un second circuit (17) comportant une entrée (18) reliée à une sortie (19) de la turbine de puissance (8),
**caractérisé en ce que** le compresseur (4) comprend un premier arbre (22) entrainé en rotation par un second arbre (23) de la turbine de détente (6) via un mécanisme de transmission (24), ledit mécanisme de transmission (24) et ledit réducteur (10) faisant partie d'un boitier de transmission (25) qui est disposé axialement à une extrémité avant (20) du turbomoteur (1), de sorte que le compresseur (4) soit axialement disposé entre le boitier de transmission (25) et la turbine de puissance (8).

2. Turbomoteur (1) selon la revendication 1, **caractérisé en ce que** la turbine de puissance (8) comprend un troisième arbre (26), les premier, second et troisième arbres (22, 23, 26) étant coaxiaux avec ledit axe longitudinal (X).

3. Turbomoteur (1) selon la revendication 2, **caractérisé en ce que** le troisième arbre (26) de la turbine de puissance (8) est disposé radialement entre les premier et second arbres (22, 23).

4. Turbomoteur (1) selon l'une des revendications précédentes, **caractérisé en ce que** ledit mécanisme de transmission (24) présente un rapport de transmission supérieur à 1, de sorte que la vitesse du premier arbre (22) du compresseur (4) soit supérieure à la vitesse du second arbre (23) de la turbine de détente (6).

5. Turbomoteur (1) selon l'une des revendications précédentes, **caractérisé en ce que** ledit mécanisme de transmission (24) est un mécanisme à engrenages.

6. Turbomoteur (1) selon la revendication 5, **caractérisé en ce que** ledit mécanisme de transmission (24) comprend une première roue dentée (39) solidaire du premier arbre (22) du compresseur (4) et une seconde roue dentée (40) solidaire du second arbre (23) de la turbine de détente (6), ledit réducteur (10) comprenant une troisième roue dentée (41) solidaire d'un troisième arbre (26) de la turbine de puissance (8), la troisième roue dentée (41) du réducteur (10) étant disposée axialement entre lesdites première et seconde roues dentées (39, 40) du mécanisme de transmission (24).

7. Turbomoteur (1) selon la revendication 6, **caractérisé en ce que** le boitier de transmission (25) présente, d'avant en arrière, la seconde roue dentée (40), la troisième roue dentée (41) et la première roue dentée (39).

8. Turbomoteur (1) selon l'une des revendications précédentes, **caractérisé en ce que** ladite prise de mouvement (9) est coaxiale ou verticalement alignée avec ledit axe longitudinal (X).

9. Turbomoteur (1) selon l'une des revendications précédentes, **caractérisé en ce que** le premier arbre (22) du compresseur (4) est guidé en rotation via un premier palier (49) et un second palier (50) disposés dans le boitier de transmission (25).

10. Turbomoteur (1) selon l'une des revendications précédentes, **caractérisé en ce que** ledit second arbre (23) de la turbine de détente (6) est guidé en rotation via un troisième palier (51) disposé dans le boitier de transmission (25), et un quatrième palier (52) disposé soit entre les turbines de détente et de puissance (6, 8) soit à une extrémité arrière dudit second arbre (23) se trouvant du côté opposé à la turbine de puissance (8).

11. Turbomoteur (1) selon l'une des revendications 2 à 10, **caractérisé en ce que** ledit troisième arbre (26) de la turbine de puissance (8) est guidé en rotation via un cinquième palier (53) disposé dans le boitier de transmission (25), et un sixième palier (54) disposé axialement entre le compresseur (4) et la turbine de puissance (8).

12. Aéronef (2), de préférence un hélicoptère monomoteur, comprenant un turbomoteur (1) selon l'une des revendications précédentes.

## Patentansprüche

1. Turbomotor (1) für ein Luftfahrzeug (2), wobei der Turbomotor Folgendes beinhaltet:
- einen Gasgenerator (3), beinhaltend einen Kompressor (4), eine Brennkammer (5) und eine Expansionsturbine (6), wobei der Kompressor (4) und die Expansionsturbine (6) sich gemäß einer gleichen Längsachse (X) erstrecken und mechanisch miteinander verbunden sind, wobei die Brennkammer (5) axial an einem hinteren Ende (7) des Turbomotors (1) angeordnet ist;
- eine Leistungsturbine (8), axial zwischen dem Kompressor (4) und der Expansionsturbine (6) angeordnet, wobei die Leistungsturbine (8) mittels eines Untersetzungsgetriebes (10) einen Nebenabtrieb (9) in Rotation versetzt;
- einen Wärmetauscher (11), umfassend:
- einen ersten Kreislauf (12), umfassend einen mit einem Ausgang (14) des Kompressors (4) verbundenen Eingang (13), und einen mit einem Eingang (16) der Brennkammer (5) verbundenen Ausgang (15), und
- einen zweiten Kreislauf (17), umfassend einen mit einem Ausgang (19) der Leistungsturbine (8) verbundenen Eingang (18),
**dadurch gekennzeichnet, dass** der Kompressor (4) eine erste Welle (22) beinhaltet, die von einer zweiten Welle (23) der Expansionsturbine (6) mittels eines Getriebemechanismus (24) in Rotation versetzt wird, wobei der Getriebemechanismus (24) und das Untersetzungsgetriebe (10) einen Teil eines Getriebegehäuses (25) ausmachen, das derart axial an einem vorderen Ende (20) des Turbomotors (1) angeordnet ist, dass der Kompressor (4) axial zwischen dem Getriebegehäuse (25) und der Leistungsturbine (8) angeordnet ist.

2. Turbomotor (1) nach Anspruch 1, **dadurch gekennzeichnet, dass** die Leistungsturbine (8) eine dritte Welle (26) beinhaltet, wobei die erste, die zweite und die dritte Welle (22, 23, 26) zu der Längsachse (X) koaxial sind.

3. Turbomotor (1) nach Anspruch 2, **dadurch gekennzeichnet, dass** die dritte Welle (26) der Leistungsturbine (8) radial zwischen der ersten und der zweiten Welle (22, 23) angeordnet ist.

4. Turbomotor (1) nach einem der vorstehenden Ansprüche, **dadurch gekennzeichnet, dass** der Getriebemechanismus (24) derart ein Getriebeübersetzung von größer als 1 aufweist, dass die Geschwindigkeit der ersten Welle (22) des Kompressors (4) größer ist als die Geschwindigkeit der zweiten Welle (23) der Expansionsturbine (6).

5. Turbomotor (1) nach einem der vorstehenden Ansprüche, **dadurch gekennzeichnet, dass** der Getriebemechanismus (24) ein Zahnradgetriebemechanismus ist.

6. Turbomotor (1) nach Anspruch 5, **dadurch gekennzeichnet, dass** der Getriebemechanismus (24) eine erste Zahnstange (39), die mit der ersten Welle (22) des Kompressors (4) fest verbunden ist, und eine zweite Zahnstange (40) beinhaltet, die mit der zweiten Welle (23) der Expansionsturbine (6) fest verbunden ist, wobei das Untersetzungsgetriebe (10) eine dritte Zahnstange (41) beinhaltet, die mit einer dritten Welle (26) der Leistungsturbine (8) fest verbunden ist, wobei die dritte Zahnstange (41) des Untersetzungsgetriebes (10) axial zwischen der ersten und der zweiten Zahnstange (39, 40) des Getriebemechanismus (24) angeordnet ist.

7. Turbomotor (1) nach Anspruch 6, **dadurch gekennzeichnet, dass** das Getriebegehäuse (25) von vorne nach hinten die zweite Zahnstange (40), die dritte Zahnstange (41) und die erste Zahnstange (39) aufweist.

8. Turbomotor (1) nach einem der vorstehenden Ansprüche, **dadurch gekennzeichnet, dass** der Nebenabtrieb (9) mit der Längsachse (X) koaxial oder vertikal ausgerichtet ist.

9. Turbomotor (1) nach einem der vorstehenden Ansprüche, **dadurch gekennzeichnet, dass** die erste Welle (22) des Kompressors (4) mittels eines ersten Lagers (49) und eines zweiten Lagers (50), die in dem Getriebegehäuse (25) angeordnet sind, rotationsgeführt wird.

10. Turbomotor (1) nach einem der vorstehenden Ansprüche, **dadurch gekennzeichnet, dass** die zweite Welle (23) der Expansionsturbine (6) mittels eines dritten Lagers (51), das in dem Getriebegehäuse (25) angeordnet ist, und eines vierten Lagers (52), das entweder zwischen der Expansions- und der Leistungsturbine (6, 8) oder an einem hinteren Ende der zweiten Welle (23), die sich auf der gegenüberliegenden Seite der Leistungsturbine (8) befindet, angeordnet ist.

11. Turbomotor (1) nach einem der Ansprüche 2 bis 10, **dadurch gekennzeichnet, dass** die dritte Welle (26) der Leistungsturbine (8) mittels eines fünften Lagers (53), das in dem Getriebegehäuse (25) angeordnet ist, und eines sechsten Lagers (54), das axial zwischen dem Kompressor (4) und der Leistungsturbine (8) angeordnet ist, rotationsgeführt wird.

12. Luftfahrzeug (2), vorzugsweise ein einmotoriger Helikopter, beinhaltend einen Turbomotor (1) nach einem der vorstehenden Ansprüche.

## Claims

1. A turboshaft engine (1) for an aircraft (2), the turboshaft engine (1) comprising:
- a gas generator (3) comprising a compressor (4), a combustion chamber (5) and an expansion turbine (6), the compressor (4) and the expansion turbine (6) extending along a common longitudinal axis (X) and being mechanically connected to one another, the combustion chamber (5) being arranged axially at a rear end (7) of the turboshaft engine (1);
- a power turbine (8) arranged axially between the compressor (4) and the expansion turbine (6), the power turbine (8) driving a power take-off (9) in rotation via a reduction gear (10);
- a heat exchanger (11) comprising:
- a first circuit (12) comprising an inlet (13) connected to an outlet (14) of the compressor (4), and an outlet (15) connected to an inlet (16) of the combustion chamber (5), and
- a second circuit (17) comprising an inlet (18) connected to an outlet (19) of the power turbine (8),
**characterised in that** the compressor (4) comprises a first shaft (22) driven in rotation by a second shaft (23) of the expansion turbine (6) via a transmission mechanism (24), said transmission mechanism (24) and said reduction gear (10) forming part of a transmission casing (25) which is arranged axially at a front end (20) of the turboshaft engine (1), so that the compressor (4) is arranged axially between the transmission casing (25) and the power turbine (8).

2. The turboshaft engine (1) according to claim 1, **characterised in that** the power turbine (8) comprises a third shaft (26), the first, second and third shafts (22, 23, 26) being coaxial with said longitudinal axis (X).

3. The turboshaft engine (1) according to claim 2, **characterised in that** the third shaft (26) of the power turbine (8) is arranged radially between the first and second shafts (22, 23).

4. The turboshaft engine (1) according to one of the preceding claims, **characterised in that** said transmission mechanism (24) has a transmission ratio greater than 1, so that the speed of the first shaft (22) of the compressor (4) is greater than the speed of the second shaft (23) of the expansion turbine (6).

5. The turboshaft engine (1) according to one of the preceding claims, **characterised in that** said transmission mechanism (24) is a gear mechanism.

6. The turboshaft engine (1) according to claim 5, **characterised in that** said transmission mechanism (24) comprises a first toothed wheel (39) secured to the first shaft (22) of the compressor (4) and a second toothed wheel (40) secured to the second shaft (23) of the expansion turbine (6), said reduction gear (10) comprising a third toothed wheel (41) secured to a third shaft (26) of the power turbine (8), the third toothed wheel (41) of the reduction gear (10) being arranged axially between said first and second toothed wheels (39, 40) of the transmission mechanism (24).

7. The turboshaft engine (1) according to claim 6, **characterised in that** the transmission casing (25) has, from front to back, the second toothed wheel (40), the third toothed wheel (41) and the first toothed wheel (39).

8. The turboshaft engine (1) according to one of the preceding claims, **characterised in that** said power take-off (9) is coaxial or vertically aligned with said longitudinal axis (X).

9. The turboshaft engine (1) according to one of the preceding claims, **characterised in that** the first shaft (22) of the compressor (4) is guided in rotation via a first bearing (49) and a second bearing (50) arranged in the transmission casing (25).

10. The turboshaft engine (1) according to one of the preceding claims, **characterised in that** said second shaft (23) of the expansion turbine (6) is guided in rotation via a third bearing (51) arranged in the transmission casing (25), and a fourth bearing (52) arranged either between the expansion and power turbines (6, 8) or at a rear end of said second shaft (23) located on the opposite side to the power turbine (8).

11. The turboshaft engine (1) according to one of claims 2 to 10, **characterised in that** said third shaft (26) of the power turbine (8) is guided in rotation via a fifth bearing (53) arranged in the transmission casing (25), and a sixth bearing (54) arranged axially between the compressor (4) and the power turbine (8).

12. An aircraft (2), preferably a single-engine helicopter, comprising a turboshaft engine (1) according to one of the preceding claims.
